Europäisches Patentamt

European Patent Office

Office européen des brevets

(11) Numéro de publication: **0 124 422**
A1

(12) # DEMANDE DE BREVET EUROPEEN

(21) Numéro de dépôt: **84400796.3**

(22) Date de dépôt: **19.04.84**

(51) Int. Cl.³: **H 04 N 5/08**

(30) Priorité: **29.04.83 FR 8307178**

(71) Demandeur: **THOMSON-CSF, 173, Boulevard Haussmann, F-75379 Paris Cedex 08 (FR)**

(43) Date de publication de la demande: **07.11.84 Bulletin 84/45**

(72) Inventeur: **Ta, Hong Anh, THOMSON-CSF SCPI 173, bld Haussmann, F-75379 Paris Cedex 08 (FR)**

(84) Etats contractants désignés: **CH DE IT LI LU**

(74) Mandataire: **Turlèque, Clotilde et al, THOMSON-CSF SCPI 173, Bld Haussmann, F-75379 Paris Cedex 08 (FR)**

(54) **Dispositif d'extraction des impulsions de synchronisation d'un signal vidéo et de génération de signaux d'alignement.**

(57) L'invention concerne un dispositif permettant d'extraire des signaux de synchronisation et de générer un signal d'alignement des impulsions de synchronisation et un signal d'alignement des paliers de suppression, peu sensible aux parasites affectant le signal vidéo.

Le dispositif comporte un dispositif (10) pour aligner les impulsions de synchronisation du signal vidéo sur une tension de référence, un dispositif (11) pour déterminer une tension de seuil, variable et égale à la demi-somme de la tension de référence et de la tension des paliers de suppression, et comporte un comparateur (3) fournissant une impulsion de synchronisation S lorsque la tension du signal vidéo est supérieure à la tension de seuil. Le signal vidéo est échantillonné sous la commande d'un signal d'alignement CLA pendant l'impulsion de synchronisation, et le palier de suppression est ensuite échantillonné sous la commande d'un signal CLB, ces deux signaux étant générés par des dispositifs de temporisation (12 et 13). Ces dispositifs de temporisation (12 et 13) sont déclenchés par le signal de synchronisation S, extrait du signal vidéo, lorsque l'impulsion de synchronisation S a une durée supérieure à 2,6 $\mu$S afin d'éliminer les impulsions parasites.

Application aux émetteurs de télévision.

0124422

1

# Dispositif d'extraction des impulsions de synchronisation d'un signal vidéo et de génération de signaux d'alignement

L'invention concerne un dispositif permettant d'extraire les impulsions de synchronisation ligne et de synchronisation trame, contenues dans un signal vidéo, et de générer deux signaux d'alignement pour aligner respectivement la crête des impulsions de synchronisation ou les paliers de suppression sur une tension de référence. Ces signaux sont nécessaires au fonctionnement d'un émetteur de télévision. Ils sont générés à partir du signal vidéo que doit transmettre l'émetteur. Dans certains cas ce signal vidéo est affecté par des variations d'amplitude ou par du bruit. Les variations d'amplitude peuvent être générées par les fluctuations de la propagation d'un faisceau hertzien par exemple ; le bruit peut être généré par des parasites atmosphériques ou par des commutations dans un magnétoscope.

Il est connu d'extraire des impulsions de synchronisation en alignant sur une tension de référence les crêtes des impulsions de synchronisation du signal vidéo, par un dispositif constitué d'une diode et d'une capacité, puis en appliquant le signal vidéo aligné à l'entrée d'un comparateur ayant un seuil fixe. Des signaux d'alignement sont ensuite générés par des monostables déclenchés par les impulsions de synchronisation extraites. Un premier inconvénient de ce procédé est qu'il génère des impulsions, de synchronisation et d'alignement, parasites déclenchées par le bruit. Un second inconvénient de ce procédé est que la durée des impulsions de synchronisation extraites est variable en fonction de l'amplitude du signal de synchronisation. Le dispositif selon l'invention remédie à ces inconvénients par des moyens simples.

Selon l'invention, un dispositif d'extraction des impulsions de synchronisation d'un signal vidéo et de génération de signaux d'alignement, est caractérisé en ce qu'il comporte :

- un dispositif d'alignement commandé par un premier signal d'alignement CLA, pour aligner les crêtes des impulsions de synchronisation du signal vidéo sur une tension de référence ;

- un comparateur fournissant une impulsion de synchronisation S, pendant chaque intervalle de temps où la valeur du signal vidéo est comprise entre la valeur de référence et une valeur du seuil ;

- un premier dispositif de temporisation déclenché par l'impulsion S pour fournir, avant la fin de cette impulsion, le premier signal d'alignement CLA, d'une durée fixée, si la durée de l'impulsion S est supérieure ou égale à une valeur fixée, cette durée étant choisie supérieure à la durée de la plupart des impulsions parasites et inférieure à la durée nominale des impulsions de synchronisation du signal vidéo.

L'invention sera mieux comprise et d'autres détails apparaîtront à l'aide de la description ci-dessous et des figures l'accompagnant :

- les figures 1, 2, 3, et 4, représentent des diagrammes temporels illustrant le fonctionnement d'un dispositif de l'art antérieur ;

- les figures 5, 7, et 8, représentent des diagrammes temporels illustrant le fonctionnement du dispositif selon l'invention ;

- la figure 6 représente le schéma synoptique d'un exemple de réalisation du dispositif selon l'invention.

Le procédé de l'art antérieur est sensible au bruit, parce que l'alignement réalisé par une diode et une capacité prend en compte toutes les crêtes du signal vidéo, aussi bien celles des impulsions de synchronisation, que celles des impulsions du bruit de forte amplitude qui est éventuellement superposé au signal de luminance. C'est pourquoi une première caractéristique du dispositif selon l'invention est de comporter un dispositif d'alignement qui ne fonctionne que pendant les impulsions de synchronisation, et non pendant les impulsions de bruit, grâce à une discrimination selon leur durée. Par ailleurs, les signaux d'alignement sont déclenchés par les impulsions de synchronisation extraites, en effectuant la même discrimination.

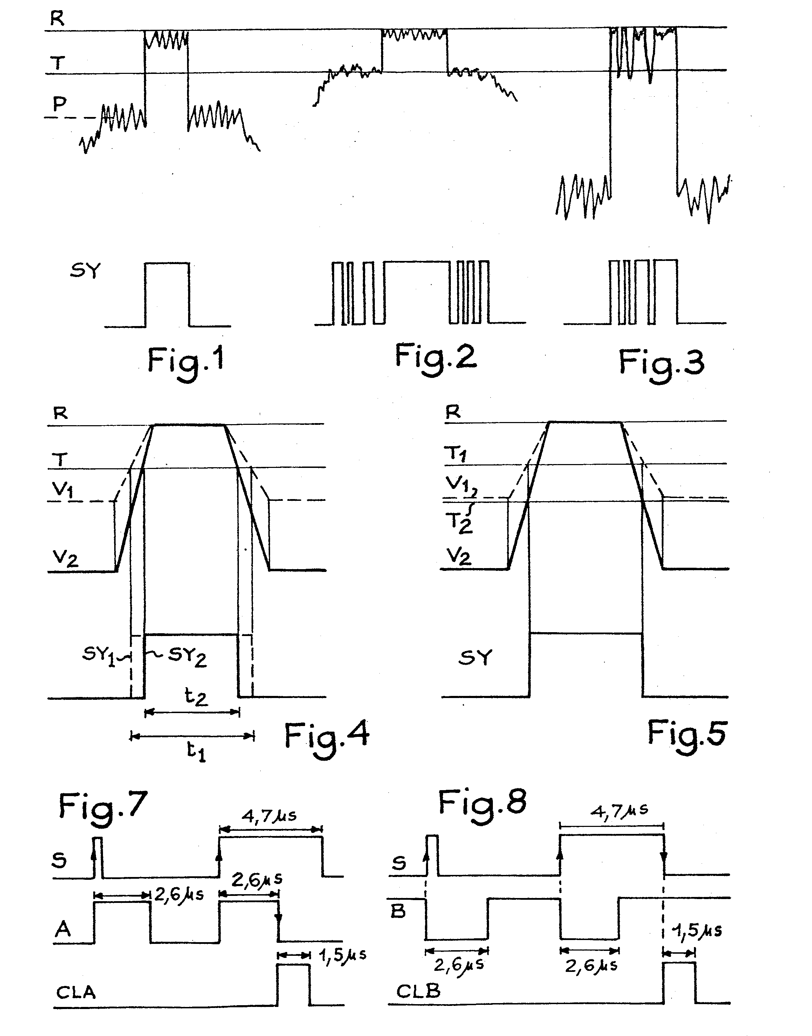

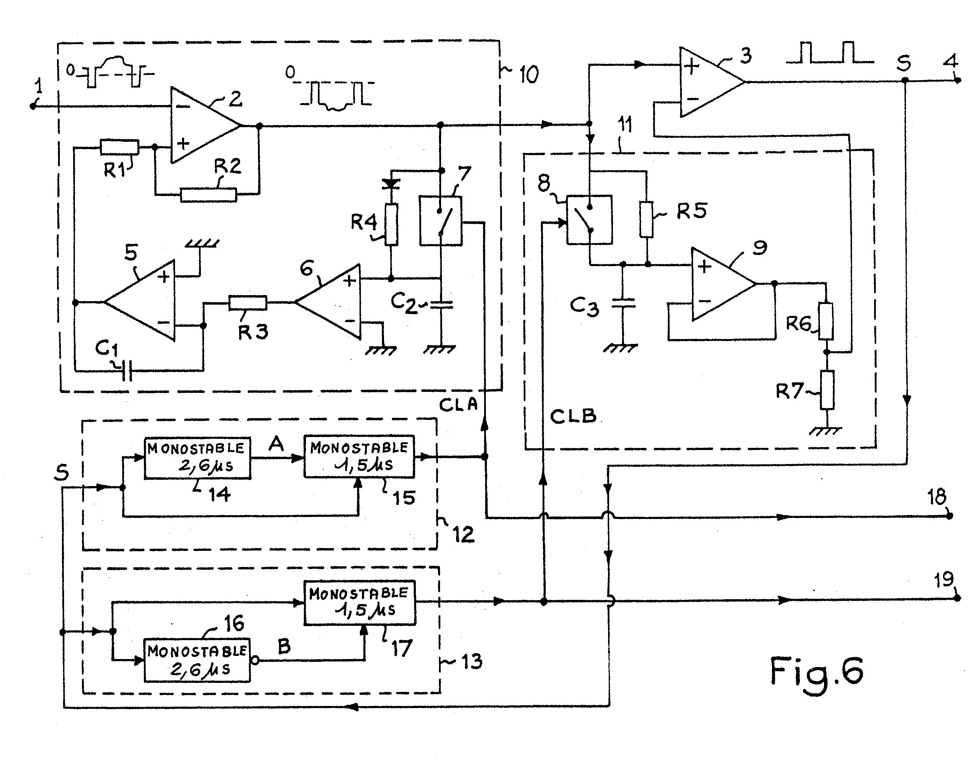

Une deuxième caractéristique du dispositif selon l'invention est de comporter un comparateur dont le seuil a une valeur variable. Les figures 1, 2, et 3, représentent un signal vidéo dans trois cas où les amplitudes sont différentes, et représentent un signal de synchronisation SY obtenu dans ces trois cas par le procédé de l'art antérieur. Sur la figure 1 le signal vidéo a une amplitude moyenne, le palier de suppression a une tension P nettement distincte de la tension de seuil T du comparateur, en dépit du bruit superposé au signal vidéo. La crête du bruit superposé à l'impulsion de synchronisation est alignée sur une tension de référence R. L'amplitude du bruit n'est pas suffisante pour que des impulsions de bruit franchissent la tension de seuil T. Dans ce cas, idéal, le signal de synchronisation SY fourni par la sortie du comparateur est une impulsion unique.

Sur la figure 2 le signal vidéo a une amplitude plus faible que dans le cas précédent, la tension du palier de suppression est peu différente de la tension de seuil T. Le bruit superposé à la tension du palier de suppression provoque de multiples franchissements du seuil T. Le signal de synchronisation SY est alors constitué d'une multitude d'impulsions parasites encadrant l'impulsion de synchronisation souhaitée.

Sur la figure 3 le signal vidéo a une amplitude nettement plus forte que dans le cas de la figure 1, et le bruit a une forte amplitude dans la même proportion. L'amplitude du bruit affectant la crête de l'impulsion de synchronisation est suffisante à certains instants pour atteindre la valeur de la tension de seuil T. Le signal de synchronisation SY est alors constitué d'une succession d'impulsions due à de multiples basculements du comparateur pendant l'intervalle de temps correspondant à l'impulsion de synchronisation souhaitée.

La figure 4 illustre le second inconvénient du procédé connu, c'est-à-dire une variation de la durée des impulsions de synchronisation en fonction de l'amplitude du signal vidéo. La figure représente uniquement une impulsion de synchronisation du signal vidéo, en exagérant le temps de montée et le temps de descente. Dans un premier cas le signal vidéo a une faible amplitude la tension du palier de suppression est $V_1$. Dans un second cas l'amplitude du signal vidéo est plus importante, la tension du palier de suppression est $V_2$. Dans les deux cas la crête de l'impulsion de synchronisation est alignée sur une tension de référence R, et la tension du signal aligné est comparée à une tension de seuil T constante. L'instant de montée, l'instant de stabilisation, l'instant de descente, et l'instant de stabilisation du signal de synchronisation sont indépendants de l'amplitude du signal vidéo, par contre les instants de basculement du comparateur varient en fonction de la pente des flancs de l'impulsion. Dans le premier cas le signal de synchronisation $SY_1$ fourni par le comparateur est une

impulsion de durée $t_1$ , et dans le deuxième cas une impulsion $SY_2$ de durée $t_2$ inférieure à $t_1$ , car $V_1$ - R est inférieure à $V_2$ - R.

Le dispositif objet de l'invention remédie à cet inconvénient grâce à un seuil de valeur variable qui est égale à la moitié de l'amplitude des impulsions de synchronisation. La figure 5 représente une impulsion de synchronisation SY, générée par un comparateur dans les deux cas représentées sur la figure 4, lorsque la tension de seuil prend respectivement une valeur $T_1$ et une valeur $T_2$ égales à la moitié de l'amplitude de l'impulsion de synchronisation du signal vidéo dans les deux cas. Il apparaît que l'impulsion de synchronisation SY a une durée identique dans les deux cas.

La figure 6 représente le schéma synoptique d'un exemple de réalisation du dispositif selon l'invention. Il comporte principalement un dispositif d'alignement 10, un dispositif 11 déterminant une tension de seuil, un comparateur 3, et deux dispositifs de temporisation 12 et 13. Le dispositif selon l'invention comporte une borne d'entrée 1 recevant un signal vidéo dont la composante continue est quelconque, et trois bornes de sortie 4, 18, et 19, fournissant respectivement un signal de synchronisation S, un signal CLA d'alignement des impulsions de synchronisation, et un signal CLB d'alignement des paliers de suppression. Le dispositif d'alignement 10 possède une première entrée reliée à la borne d'entrée 1, une seconde entrée reliée à une sortie du dispositif de temporisation 12, et une sortie reliée à l'entrée "+" du comparateur 3. Le dispositif 11 possède une première entrée reliée à une sortie du dispositif de temporisation 13, une seconde entrée reliée à la sortie du dispositif 10, et une sortie reliée à l'entrée "-" du comparateur 3. Le comparateur 3 a une sortie reliée à la borne de sortie 4. Les dispositifs de temporisation 12 et 13 ont chacun une entrée reliée à la sortie du comparateur 3 pour recevoir le signal de synchronisation S.

Le dispositif d'alignement 10 est constitué d'un dispositif soustracteur, d'un dispositif échantillonneur-bloqueur et d'un dispositif de filtrage. Le dispositif soustracteur est constitué d'un amplificateur opérationnel 2 dont l'entrée "-" est reliée à l'entrée du dispositif 10, dont l'entrée "+" est reliée à une première extrémité d'une résistance $R_1$ et à une première extrémité d'une résistance $R_2$ , et dont la sortie est reliée à la seconde extrémité de la résistance $R_2$ et à la sortie du dispositif 10. Le dispositif échantillonneur-bloqueur est constitué principalement d'un commutateur 7, d'une capacité $C_2$, et d'un amplificateur opérationnel 6. Le commutateur 7 relie la sortie de l'amplificateur opérationnel 2, d'une part à une première extrémité de la capacité $C_2$ de mémoire et d'autre part à l'entrée "+" de l'amplificateur opérationnel 6, sous la commande du signal d'alignement CLA, reçu sur la seconde entrée du dispositif 10. Le dispositif de filtrage est un intégrateur constitué d'un amplificateur opérationnel 5, d'une capacité $C_1$, et d'une résistance $R_3$. L'entrée "+" de l'amplificateur opérationnel 5 est reliée à la tension de référence du dispositif, l'entrée "-" est reliée à une première extrémité de la résistance $R_3$ et à une première extrémité de la capacité $C_1$. La seconde extrémité de la résistance $R_3$ est reliée à la sortie d'un amplificateur opérationnel 6, et la seconde extrémité de la capacité $C_1$ est reliée d'une part à la sortie de l'amplificateur opérationnel 5 et d'autre part à la seconde extrémité de la résistance $R_1$ du dispositif soustracteur. Le dispositif 10 comporte en outre un dispositif d'initialisation constitué par une diode D et une résistance $R_4$ reliées en série entre la sortie du dispositif 10 et l'entrée "+" de l'amplificateur opérationnel 6, l'anode de la diode D étant reliée à la sortie du dispositif 10.

Le dispositif 11, déterminant une tension de seuil, est constitué d'un échantillonneur-bloqueur commandé par le signal d'alignement CLB, reçu sur la première entrée du dispositif 11, et d'un dispositif diviseur de tension ayant un rapport fixe. Le dispositif échantillonneur-bloqueur est constitué principalement d'un amplificateur opérationnel 9, d'un commutateur 8 commandé par le signal d'alignement CLB, et d'une capacité de mémoire $C_3$. Le commutateur 8 relie la seconde entrée du dispositif 11 à une première extrémité de la capacité $C_3$ et à l'entrée "+" de l'amplificateur opérationnel 9. La seconde extrémité de la capacité $C_3$ est reliée à la tension de référence du dispositif selon l'invention. Une résistance $R_5$ shunte le commutateur 8 et constitue un dispositif d'initialisation. Le diviseur de tension est constitué par un pont de deux résistances, $R_6$ et $R_7$, ayant une même valeur. Une première extrémité de ce pont est reliée à la sortie de l'amplificateur opérationnel 9, une seconde extrémité est reliée à la tension de référence, et le point milieu est relié à la sortie du dispositif 11, il fournit la tension de seuil.

Le dispositif de temporisation 12 est constitué de deux monostables 14 et 15. Le monostable 14 a une entrée d'horloge reliée à l'entrée du dispositif 12 et a une sortie reliée à une entrée d'horloge du monostable 15. Le monostable 15 possède une entrée de validation reliée à l'entrée du dispositif 12, et une sortie qui constitue la sortie du dispositif 12. Le dispositif de temporisation 13 comporte deux monostables 16 et 17. Le monostable 16 a une entrée d'horloge reliée à l'entrée du dispositif 13 et une sortie reliée à une entrée de validation du monostable 17. Le monostable 17 possède une entrée d'horloge reliée à l'entrée du dispositif 13, et une sortie qui constitue la sortie du dispositif 13.

Il est à remarquer que le dispositif selon l'invention comporte un rebouclage puisque le signal de synchronisation S, extrait du signal vidéo, commande les dispositifs de temporisation 12 et 13 générant les signaux d'alignement CLA et CLB qui permettent le fonctionnement des dispositifs 10 et 11 pour extraire le signal de synchronisation S. Le signal d'alignement CLA commande le commutateur 7 pour échantillonner le signal vidéo pendant son impulsion de synchronisation. La valeur de l'échantillon est mémorisée par la capacité $C_2$ pendant la durée d'une ligne, et est comparée à la tension de seuil par le comparateur 6. Le signal fourni par la sortie du comparateur 6 est intégré par l'intégrateur constitué de l'amplificateur opérationnel 5, de la résistance $R_3$, et de la capacité $C_1$, dont la constante de temps est de 0,47 mS. L'amplificateur opérationnel 2 et son réseau de contre-réaction, $R_1$ et $R_2$, amplifient dans le rapport $\frac{R_2}{R_1}$ la tension fournie par la sortie de l'intégrateur. Cette tension constitue une tension d'erreur décalant le signal vidéo dans un sens tel que la crête des impulsions de synchronisation du signal vidéo s'aligne sur la tension de référence. L'intégrateur permet d'avoir un gain de boucle très grand et d'éliminer les fluctuations de fréquence élevée. Sa constante de temps permet à l'alignement de suivre un ronflement superposé au signal vidéo et ayant une fréquence allant jusqu'à 300 Hz. Pendant l'initialisation du fonctionnement l'absence du signal CLA empêche le fonctionnement du commutateur 7 ; la diode D et la résistance $R_4$ permettent alors le démarrage. L'alignement, dans ce cas, est réalisé sur des crêtes du signal vidéo qui peuvent être des impulsions parasites et non des impulsions de synchronisation. Après l'initialisation, la génération du signal CLA permet de réaliser un alignement sur les crêtes des impulsions de synchronisation exclusivement.

Le signal vidéo, aligné sur le potentiel de référence par le dispositif d'alignement 10, est ensuite comparé par rapport à la tension de seuil fournie par la sortie du dispositif 11. Le signal CLB commande le commutateur 8 pour échantillonner le signal vidéo aligné, pendant le palier de suppression. La valeur du signal échantillonné est mémorisée par la capacité $C_3$ pendant la durée d'une ligne. L'amplificateur opérationnel 9 permet la conservation de cette valeur dans la capacité $C_3$ en évitant sa décharge. Le diviseur de tension, $R_6$ - $R_7$ , fournit une tension égale à la demi-somme de la tension du palier de suppression et de la tension de référence car les résistances $R_6$ et $R_7$ sont de même valeur. La tension à la sortie du comparateur 3 saute d'un niveau bas à un niveau haut quand la tension du signal vidéo aligné dépasse la valeur de seuil, puis elle saute du niveau haut au niveau bas lorsque la tension du signal vidéo aligné redescend en-dessous de la valeur de seuil. Pendant l'initialisation du fonctionnement l'absence du signal CLB empêche l'échantillonnage par le commutateur 8, c'est pourquoi il est prévu la résistance $R_5$ pour le démarrage du fonctionnement. Le courant de polarisation de l'entrée "+" de l'amplificateur opérationnel 9 crée une tension légèrement négative sur cette entrée à cause de la résistance $R_5$ dont la valeur est élevée : $1M\Omega$. Cette tension négative permet de générer une tension de seuil légèrement négative qui permet le démarrage du fonctionnement.

Les dispositifs de temporisation 12 et 13 permettent de discriminer des impulsions en fonction de leur durée. Les signaux CLA et CLB ne sont pas générés pour des impulsions S dont la durée est inférieure à 2,6 µS, ainsi l'alignement réalisé par le dispositif 10 et la détermination de la tension de seuil par le dispositif 11 ne sont pas perturbés par les impulsions parasites, à l'exception de celles survenant pendant les intervalles d'échantillonnage, par conséquent le signal de synchronisation S est beaucoup moins perturbé que dans le cas d'un dispositif classique d'extraction de la synchronisation. Comme le signal S commande la génération des signaux d'alignement CLA et CLB, qui sont fournis par les bornes de sortie 18 et 19 du dispositif selon l'invention, ces signaux d'alignement sont donc, eux aussi, peu affectés par les parasites.

La figure 7 représente des diagrammes temporels illustrant le fonctionnement du dispositif de temporisation 12. D'une part, le signal S déclenche le monostable 14 pour générer un signal impulsionnel A de durée 2,6 µS, et d'autre part, le signal S valide par son niveau haut le monostable 15. Quand il est validé, le monostable 15 peut être déclenché par un front descendant du signal A pour fournir une impulsion de durée 1,5 µS qui constitue le signal d'alignement CLA. Si le signal S est constitué d'une impulsion parasite de durée inférieure à 2,6 µS , le front descendant du signal A ne déclenche pas le monostable 15 car celui-ci n'est pas validé, le signal S étant revenu rapidement au niveau bas. Par contre, si le signal S est constitué d'une impulsion de synchronisation ligne, celle-ci ayant une durée nominale de 4,7 µS, le monostable 15 est encore validé par le signal S lorsque le signal A revient au niveau 0. Le monostable 15 génère alors une impulsion de durée 1,5 µS.

La figure 8 représente des diagrammes temporels illustrant le fonctionnement du dispositif de temporisation 13. Chaque front montant du signal S déclenche la génération d'un signal B par le monostable 16. Au repos la sortie du monostable 16 est au niveau haut ; le signal B est constitué d'une impulsion négative de durée 2,6 µS qui inhibe le monostable 17. Un front descendant du signal S déclenche le monostable 17 seulement si celui-ci est validé. Si le signal S est constitué par une impulsion parasite de durée inférieure à 2,6 µS , le monostable 16 génère une impulsion négative qui inhibe le monostable 17 pendant une durée de 2,6 µS, le front descendant de l'impulsion S ne peut donc pas déclencher le monostable 17. Par contre, une impulsion de synchronisation ligne, ayant une durée nominale de 4,7 µS , provoque non seulement le déclenchement du monostable 16 sur son front montant, mais aussi le déclenchement du monostable 17 sur son front descendant, puisque le monostable 17 est validé de nouveau par le monostable 16 à la fin de l'impulsion négative. Le monostable 17 génère alors une impulsion de durée 1,5 µS. Naturellement les impulsions de synchronisation trame, qui ont une durée supérieure aux impulsions de synchronisation ligne, déclencheront de la même façon le fonctionnement du dispositif selon l'invention.

Il est à la portée de l'homme de l'art de réaliser différemment un dispositif d'alignement 10 commandé par le signal d'alignement CLA, ou un dispositif 11, commandé par le signal d'alignement CLB, déterminant une tension de seuil égale à une fraction constante de l'amplitude des impulsions de synchronisation, ou les dispositifs de temporisation 12 et 13. Cette fraction constante peut être différente de 1/2 mais elle ne doit pas trop s'en éloigner car la tension de seuil se rapprocherait de la tension de crête du bruit superposé à l'impulsion de synchronisation, ou du bruit superposé au palier de suppression, ce qui diminuerait la marge d'immunité au bruit.

Le dispositif selon l'invention est applicable notamment dans les émetteurs de télévision.

## REVENDICATIONS

1. Dispositif d'extraction des impulsions de synchronisation d'un signal vidéo et de génération de signaux d'alignement, caractérisé en ce qu'il comporte :

- un dispositif d'alignement (10) commandé par un premier signal d'alignement CLA, pour aligner les crêtes des impulsions de synchronisation du signal vidéo sur une tension de référence ;

- un comparateur (3) fournissant une impulsion de synchronisation S, pendant chaque intervalle de temps où la valeur du signal vidéo est comprise entre la valeur de référence et une valeur du seuil ;

- un premier dispositif de temporisation (12) déclenché par l'impulsion S pour fournir, avant la fin de cette impulsion, le premier signal d'alignement CLA, d'une durée fixée, si la durée de l'impulsion S est supérieure ou égale à une valeur fixée, cette durée étant choisie supérieure à la durée de la plupart des impulsions parasites et inférieure à la durée nominale des impulsions de synchronisation du signal vidéo.

2. Dispositif selon la revendication 1, caractérisé en ce que la tension de seuil est variable et en ce que le dispositif comporte en outre :

- un dispositif (11) déterminant une tension de seuil égale à une fraction constante de la somme de la tension de référence et de la tension du palier de suppression du signal vidéo, cette dernière tension étant échantillonnée sous l'action d'un second signal d'alignement CLB ;

- un second dispositif de temporisation (13), déclenché par l'impulsion S, pour fournir, après la fin de cette impulsion, le second signal d'alignement CLB avec une durée fixée et un retard fixé correspondant à un échantillonnage du palier de suppression, si la durée de l'impulsion S est supérieure à une durée fixée qui est choisie supérieure à la durée de la plupart des impulsions parasites et inférieure à la durée nominale des impulsions de synchronisation du signal vidéo.

3. Dispositif selon la revendication 2, caractérisé en ce que le dispositif (11) déterminant une tension de seuil, fournit une tension égale à la demi-somme de la tension de référence et de la tension de palier de suppression du signal vidéo.

4. Dispositif selon la revendication 1, caractérisé en ce que le dispositif d'alignement (10) comporte :

- un échantillonneur-bloqueur (6, 7, $C_2$), commandé par le premier signal d'alignement CLA ;

- un dispositif de filtrage (5, $C_1$, $R_3$) pour filtrer le signal fourni par l'échantillonneur-bloqueur (6, 7, $C_2$) ;

- un soustracteur (2, $R_1$, $R_2$) ayant une première entrée recevant le signal vidéo, une seconde entrée recevant un signal filtré fourni par le dispositif de filtrage (5, $C_1$, $R_3$), et une sortie constituant la sortie du dispositif d'alignement (10) ;

- un dispositif d'initialisation (D, $R_4$) pour aligner les crêtes des impulsions de synchronisation du signal vidéo sur la valeur de référence pendant la durée de l'initialisation, le premier signal d'alignement CLA n'étant pas encore généré.

5. Dispositif selon la revendication 2, caractérisé en ce que le dispositif (11) déterminant une tension de seuil, comporte :

- un échantillonneur-bloqueur (8, 9, $C_3$) recevant le signal vidéo aligné par le dispositif d'alignement (10), et commandé par le second signal d'alignement CLB ;

- un diviseur de tension ($R_6$, $R_7$) recevant sur une première borne la tension, correspondant au niveau de suppression, fournie par l'échantillonneur-bloqueur (8, 9, $C_3$), et sur une deuxième borne la tension de référence ; et fournissant sur une troisième borne la tension de seuil.

Fig.1  Fig.2  Fig.3

Fig.4  Fig.5

Fig.7  Fig.8

Fig.6

0124422

Office européen
des brevets

**RAPPORT DE RECHERCHE EUROPEENNE**

Numéro de la demande

EP 84 40 0796

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | FR-A-2 493 635 (TEXAS INSTRUMENTS FRANCE) * Page 9, revendication 1; page 10, revendications 8,9 * | 1 | H 04 N 5/08 |
| A | US-A-3 699 256 (ROTH) * Colonne 4, lignes 7-23 * | 1,2 | |
| A | US-A-4 084 187 (SCHOLTZHAUER) | 1 | |
| A | US-A-4 097 896 (AVERY) | 1 | |

DOMAINES TECHNIQUES
RECHERCHES (Int. Cl. 3)

H 04 N 5/08
H 04 N 5/21

Le présent rapport de recherche a été établi pour toutes les revendications

| Lieu de la recherche | Date d'achèvement de la recherche | Examinateur |
|---|---|---|
| LA HAYE | 10-08-1984 | SIX G.E.E. |

OEB Form 1503. 03.82

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant